# EUROPEAN PATENT APPLICATION

(11) **EP 4 353 981 A1**
(43) Date of publication of application: **17.04.2024**
(21) Application number: 22820283.4
(22) Date of filing: 08.06.2022
(51) Int. Cl.: F16C 32/04, H02K 7/02, H02K 7/09

(54) **MAGNETIC BEARING, FLYWHEEL DEVICE, AND ELECTRIC POWER GENERATION SYSTEM USING SAME**

(30) Priority: 08.06.2021 JP 2021095664
(71) Applicant: Tanaka, Akihiko, Saitama-shi, Saitama 331-0813 (JP); Wang, Yu, Saitama-shi, Saitama 331-0813 (JP)
(72) Inventor: Tanaka, Akihiko, Saitama-shi, Saitama 331-0813 (JP); Wang, Yu, Saitama-shi, Saitama 331-0813 (JP)
(74) Representative: Vossius & Partner Patentanwälte Rechtsanwälte mbB
(86) International application number: PCT/JP2022/023187
(87) International publication number: WO 2022/260104

(57) **Abstract**

A bearing 100 is provided between an outermost peripheral portion and an innermost peripheral portion of a flywheel 110. The bearing 100 includes a bearing rotor 120 firmly fixed to rotate integrally with the flywheel 110, and a bearing stator 130 provided inside the bearing rotor 120 in a fixed state, and includes a radially outer side magnet 121 and a radially inner side magnet 131 with the same magnetic pole on the bearing rotor 120 and the bearing stator 130 at positions facing each other. Accordingly, the bearing rotor 120 rotates at a position close to a rotating shaft 1, so that the rotation of the bearing rotor 120 and the flywheel 110 rotating with the bearing rotor 120 is stabilized, and the bearing 100 is compactly disposed at a position inside the outermost peripheral portion of the flywheel 110, thereby being capable of downsizing the device.

## Description

### Technical Field

The present invention relates to a magnetic bearing, a flywheel device, and an electric power generation system using the same.

### Background Art

In the related art, an electric power generation device including a flywheel has been provided. Generally, the flywheel is used for applications such as stabilizing the rotation speed by suppressing uneven rotation of a rotation mechanism. An electric power generation device that adopts a non-contact type magnetic bearing as a bearing of a rotation mechanism to reduce resistance caused by the rotation of a flywheel has also been known (for example, refer to PTL 1).

The magnetic bearing described in PTL 1 is realized by repulsion between respective magnetic poles of an inner peripheral side magnet formed on an outer periphery of the flywheel and an outer peripheral side magnet disposed on a housing to face the inner peripheral side magnet. It has been described that since the flywheel described in PTL 1 also has the function of a magnetic bearing such as magnetically levitating and supporting a rotor in addition to the original purpose of stabilizing the rotation of the rotor, the electric power generation device can be downsized.

Note that in addition to the electric power generation device including the flywheel, there are many devices that adopt a magnetic bearing. For example, PTL 2 discloses a machine tool configured such that a main shaft is supported in a non-contact manner with respect to a housing using magnetic bearings. The machine tool described in PTL 2 includes a radial magnetic bearing that generates a repulsive force radially in a direction perpendicular to a rotating shaft using a ring-shaped permanent magnet provided on a side surface of the rotor, and a thrust magnetic bearing that generates a repulsive force in a direction parallel to the rotating shaft using a disk-shaped permanent magnet. The main shaft is configured to be supported in a non-contact manner with respect to the housing by the radial magnetic bearing and the thrust magnetic bearing.

PTL 1: JP2018-191507A
PTL 2: JP2006-22944A

### Summary of Invention

### Technical Problem

As described above, in the magnetic bearing described in PTL 1, the inner peripheral side magnet is formed on the outer periphery of the flywheel. Namely, since the inner peripheral side magnet is located on the flywheel at a farthest position from a rotating shaft, uneven rotation is likely to occur during a startup due to the influence of weight balance of the inner peripheral side magnet, which is a problem. In addition, PTL 1 has been described that since the flywheel also has the function of a magnetic bearing, the electric power generation device can be downsized; however, since it is necessary to form the inner peripheral side magnet on the outer periphery of the flywheel and further dispose the outer peripheral side magnet outside the inner peripheral side magnet, the size of the device is increased compared to a case where there are no magnets in these locations.

The invention has been made to solve such problems, and an object of the invention is to be able to suppress the occurrence of uneven rotation during a startup of a flywheel in a device using the flywheel supported by a magnetic bearing, and downsize the device.

### Solution to Problem

In order to solve the above-described problems, the invention includes: a bearing rotor provided between an outermost peripheral portion and an innermost peripheral portion of a flywheel, and firmly fixed to the flywheel so as to rotate integrally with the flywheel; and a bearing stator provided inside the bearing rotor in a fixed state. The bearing rotor includes a radially outer side magnet disposed on an inner peripheral surface, and the bearing stator includes a radially inner side magnet having the same magnetic pole as the radially outer side magnet and disposed at a position facing the radially outer side magnet in a radial direction.

### Advantageous Effects of Invention

According to the invention configured as described above, the radially outer side magnet is not provided on an outer peripheral side of the flywheel, and the bearing rotor including the radially outer side magnet is provided at an inner position closer to the rotating shaft than the outermost peripheral portion of the flywheel. Since the bearing rotor including the radially outer side magnet rotates at the position close to the rotating shaft, the rotation of the bearing rotor and the flywheel rotating together with the bearing rotor is stabilized, and the occurrence of uneven rotation is suppressed from a startup of the flywheel, so that the rotation speed can be stabilized. In addition, since not only the bearing rotor but also the bearing stator facing the bearing rotor are not provided at positions outside the outermost peripheral portion of the flywheel, the device including the flywheel supported by the magnetic bearing can be downsized.

### Brief Description of Drawings

[FIG. 1] FIG. 1 is a view schematically showing a configuration example of an electric power generation system according to the present embodiment.
[FIG. 2] FIG. 2 is a view showing a configuration example of a motor.
[FIG. 3] FIG. 3 is a view showing a configuration example of a generator.
[FIG. 4] FIG. 4 is a view showing a configuration example of a flywheel device.
[FIG. 5] FIG. 5 is a view showing a bearing rotor when a bottom surface side is viewed from an opening side.
[FIG. 6] FIG. 6 is a view showing a bearing stator when a bottom surface side is viewed from an opening side.
[FIG. 7] FIG. 7 is a view showing an orientation direction of a radially outer side magnet and a radially inner side magnet.
[FIG. 8] FIG. 8 is a view showing an orientation direction of a wheel proximal side magnet and a wheel distal side magnet.

### Description of Embodiments

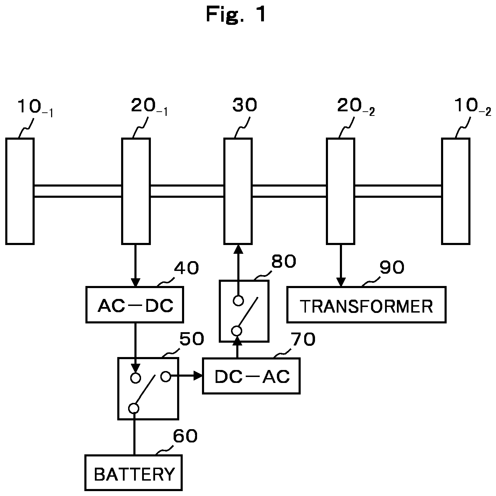

Hereinafter, one embodiment of the invention will be described based on the drawings. FIG. 1 is a view schematically showing a configuration example of an electric power generation system according to the present embodiment. As shown in FIG. 1, the electric power generation system of the present embodiment includes a pair of flywheel devices 10₋₁ and 10₋₂ (in the following description, unless otherwise distinguished, simply referred to as a flywheel device 10), a pair of generators 20₋₁ and 20₋₂ (in the following description, unless other distinguished, simply referred to as a generator 20), and one motor 30 that are supported by the same rotating shaft 1. The pair of flywheel devices 10₋₁ and 10₋₂ and the pair of generators 20₋₁ and 20₋₂ are provided at positions symmetrical with respect to one motor 30 as the center.

The electric power generation system shown in FIG. 1 generates electric power by driving the motor 30 to rotate a rotor (not shown in FIG. 1) of the motor 30 and to rotate a rotor (not shown in FIG. 1) of the generator 20 through the rotating shaft 1 firmly fixed to the rotor. At this time, a flywheel (not shown in FIG. 1) of the flywheel device 10 rotates together with the rotating shaft 1 to suppress uneven rotation of the rotor, thereby stabilizing the rotation speed.

The electric power generation system of the present embodiment further includes an AC-DC inverter 40, a charge/discharge switching switch 50, a battery 60, a DC-AC inverter 70, a drive switch 80, and a transformer 90. The AC-DC inverter 40 converts an AC voltage generated by the generator 20₋₁ into a DC voltage. The battery 60 is charged and discharged based on the DC voltage converted by the AC-DC inverter 40. The charge/discharge switching switch 50 is a switch for switching between the charging and discharging the battery 60.

The DC-AC inverter 70 converts a DC voltage generated by discharging the battery 60 into an AC voltage. The drive switch 80 is a switch for driving the motor 30, and the AC voltage converted by the DC-AC inverter 70 is applied to the motor 30 by turning on the drive switch 80. The charge/discharge switching switch 50 and the drive switch 80 are linked with each other, and when the drive switch 80 is turned on, the charge/discharge switching switch 50 is switched to a discharge side. The transformer 90 converts the AC voltage generated by the generator 20₋₂ into a standard AC voltage for household use.

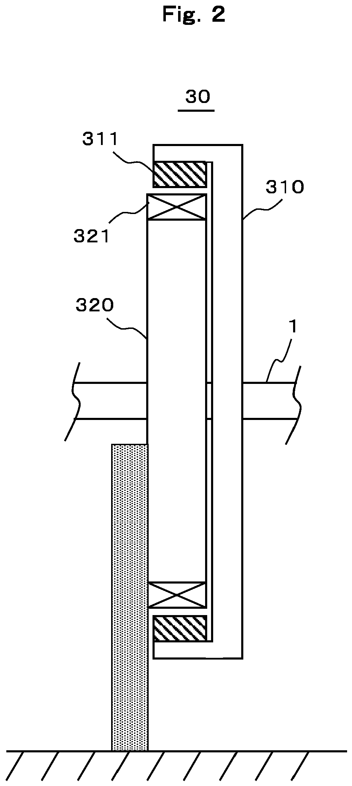

FIG. 2 is a view showing a configuration example of the motor 30. As shown in FIG. 2, the motor 30 includes a drive rotor 310 having a bottomed cylindrical shape, fixed to the rotating shaft 1, and rotating together with the rotating shaft 1, and a drive stator 320 having a disk shape and provided inside the drive rotor 310 in a fixed state instead of rotating integrally with the drive rotor 310. The rotating shaft 1 is provided at a shaft center portion of the drive rotor 310 and the drive stator 320, and is disposed to be rotatable relative to the drive stator 320 while the rotating shaft 1 is fixed to the drive rotor 310.

A coil 321 is wound around an outer peripheral portion of the drive stator 320. In addition, a permanent magnet 311 is firmly fixed to an inner peripheral surface of the drive rotor 310 located outside the coil 321, so as to face the coil 321. When the drive switch 80 is turned on to energize the coil 321, the drive rotor 310 is rotated by electromagnetic induction between the coil 321 and the permanent magnet 311. Accordingly, the rotating shaft 1 to which the drive rotor 310 is firmly fixed also rotates, and the rotation is transmitted to the generator 20 and the flywheel device 10.

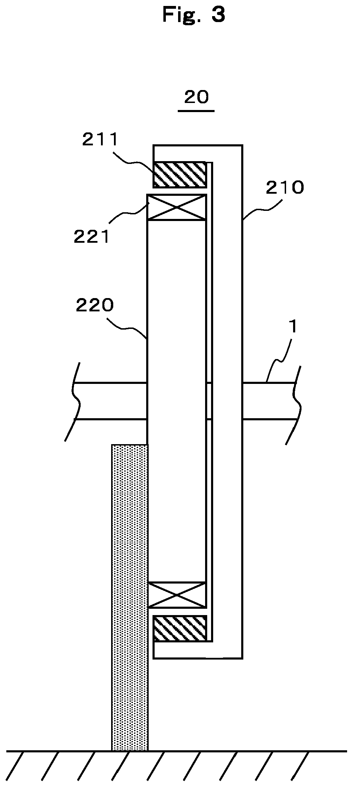

FIG. 3 is a view showing a configuration example of the generator 20. As shown in FIG. 3, the generator 20 includes an electric power generation rotor 210 having a bottomed cylindrical shape, fixed to the rotating shaft 1, and rotating together with the rotating shaft 1, and an electric power generation stator 220 having a disk shape and provided inside the electric power generation rotor 210 in a fixed state instead of rotating integrally with the electric power generation rotor 210. The rotating shaft 1 is provided at a shaft center portion of the electric power generation rotor 210 and the electric power generation stator 220, and is disposed to be rotatable relative to the electric power generation stator 220 while the rotating shaft 1 is fixed to the electric power generation rotor 210.

A coil 221 is wound around an outer peripheral portion of the electric power generation stator 220. In addition, a permanent magnet 211 is firmly fixed to an inner peripheral surface of the electric power generation rotor 210 located outside the coil 221, so as to face the coil 221. When the electric power generation rotor 210 rotates along with the rotation of the rotating shaft 1, an electromotive force is generated in the coil 221 due to electromagnetic induction between the permanent magnet 211 rotating together with the electric power generation rotor 210 and the coil 221. Then, the AC voltage thus generated is supplied to the AC-DC inverter 40 and the transformer 90.

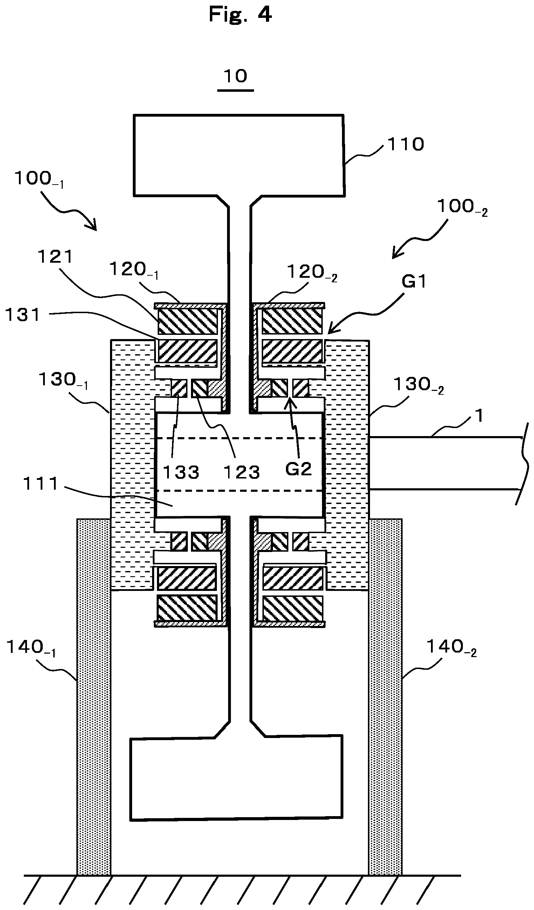

FIG. 4 is a view showing a configuration example of the flywheel device 10. As shown in FIG. 4, the flywheel device 10 of the present embodiment includes a flywheel 110 fixed to the rotating shaft 1 and rotating together with the rotating shaft 1; a first bearing 100₋₁ provided on one surface of the flywheel 110; and a second bearing 100₋₂ provided on the other surface opposite to the surface on which the first bearing 100₋₁ is provided (here, unless otherwise distinguished, simply referred to as a bearing 100) .

The first bearing 100₋₁ includes a first bearing rotor 120₋₁ firmly fixed to the flywheel 110 so as to rotate integrally with the flywheel 110, and a first bearing stator 130₋₁ provided in a fixed state instead of rotating together with the flywheel 110. The first bearing rotor 120₋₁ is provided between an outermost peripheral portion and an innermost peripheral portion (rotating shaft 1) of the flywheel 110, and the first bearing stator 130₋₁ is provided inside the bearing rotor 120₋₁.

Similarly, the second bearing 100₋₂ includes a second bearing rotor 120₋₂ firmly fixed to the flywheel 110 so as to rotate integrally with the flywheel 110, and a second bearing stator 130₋₂ provided in a fixed state instead of rotating together with the flywheel 110. The second bearing rotor 120₋₂ is provided between the outermost peripheral portion and the innermost peripheral portion (rotating shaft 1) of the flywheel 110, and the second bearing stator 130₋₂ is provided inside the bearing rotor 120₋₂.

In such a manner, a set of the bearing rotor 120 and the bearing stator 130 are provided on each of both the one surface of the flywheel 110 and the other surface opposite to the one surface. The rotating shaft 1 is provided at a shaft center portion of the flywheel 110, the bearing rotor 120 (the first bearing rotor 120₋₁ and the second bearing rotor 120₋₂), and the bearing stator 130 (the first bearing stator 130₋₁ and the second bearing stator 130₋₂), and is disposed to be rotatable relative to the bearing stator 130 while the rotating shaft 1 is fixed to the flywheel 110.

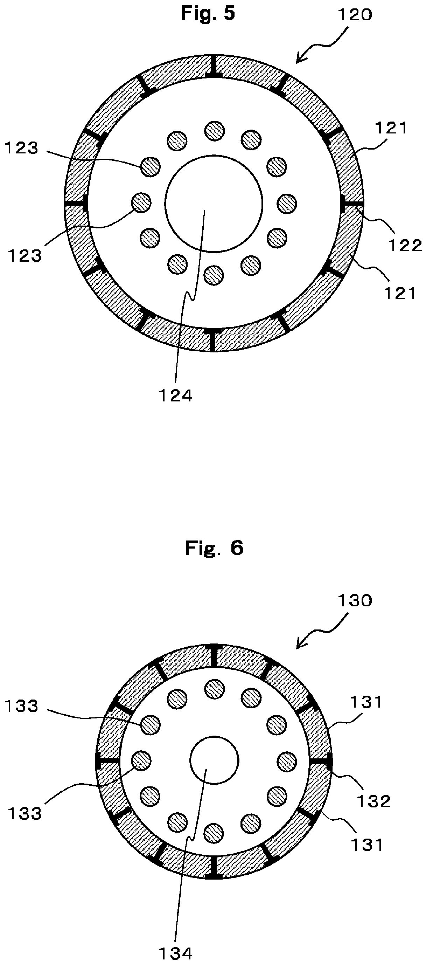

The bearing rotor 120 is a bottomed cylindrical rotor in which an upper end is opened while a bottom plate is provided at a lower end, a bottom surface side is firmly fixed to the flywheel 110, and the bearing stator 130 is disposed at an opening portion of the upper end. FIG. 5 is a view showing the bearing rotor 120 when the bottom surface side is viewed from an opening side. As shown in FIG. 5, a through-hole 124 for passing a shaft support portion 111 of the flywheel 110 is provided at a central portion of a bottom surface of the bearing rotor 120.

As shown in FIGS. 4 and 5, the bearing rotor 120 includes a plurality of magnets 121 disposed on an inner peripheral surface of the cylindrical shape. As shown in FIG. 4, the magnets 121 are disposed outside (on a radially outer side) of an outer peripheral surface of the bearing stator 130. Hereinafter, the magnets 121 are referred to as radially outer side magnets. The plurality of radially outer side magnets 121 are all permanent magnets with the same magnetic pole (for example, N pole), and for example, neodymium magnets are used.

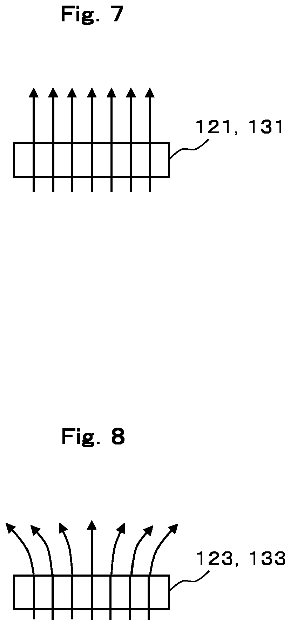

As shown in FIG. 7, the radially outer side magnet 121 is a magnet that generates an oriented magnetic field parallel to a thickness direction of the radially outer side magnet 121, and is disposed such that the thickness direction faces a radial direction of the cylindrical shape of the bearing rotor 120. Namely, magnetic fluxes of the radially outer side magnet 121 are emitted in the radial direction of the bearing rotor 120. A magnetic flux leakage prevention cover member 122 is provided between the radially outer side magnets 121 adjacent to each other, and the influence of magnetic force between the radially outer side magnets 121 adjacent to each other is blocked.

In addition, the bearing rotor 120 includes a plurality of magnets 123 disposed on the bottom surface of the cylindrical shape. As shown in FIG. 4, the magnets 123 are disposed closer to the flywheel 110 than magnets 133 provided on the bearing stator 130. Hereinafter, the magnets 123 are referred to as wheel proximal side magnets 123. The plurality of wheel proximal side magnets 123 are all permanent magnets with the same magnetic pole (for example, N pole), and for example, neodymium magnets are used.

As shown in FIG. 5, the plurality of wheel proximal side magnets 123 are equally disposed in a circular shape with constant intervals therebetween. As shown in FIG. 8, the wheel proximal side magnet 123 is a magnet that generates an oriented magnetic field parallel to a thickness direction in the vicinity of the magnet, but deflecting in a radial direction as the oriented magnetic field extends away from the magnet, and is disposed such that the thickness direction faces the direction of the rotating shaft 1. Namely, magnetic fluxes of the wheel proximal side magnets 123 are emitted in an axial direction.

The bearing stator 130 is a bottomed cylindrical stator in which an upper end is opened while a bottom plate is provided at a lower end, a bottom surface side is firmly fixed to a fixing member 140, and the bearing rotor 120 is disposed on an opening side of the upper end. FIG. 6 is a view showing the bearing stator 130 when the bottom surface side is viewed from the opening side. As shown in FIG. 6, a through-hole 134 for passing the rotating shaft 1 is provided at a central portion of the bottom surface of the bearing stator 130.

As shown in FIGS. 4 and 6, the bearing stator 130 includes a plurality of magnets 131 disposed at positions facing the radially outer side magnets 121 in the radial direction. As shown in FIG. 4, the magnets 131 are disposed inside (on a radially inner side) of the radially outer side magnets 121 of the bearing rotor 120. Hereinafter, the magnets 131 are referred to as radially inner side magnets. The plurality of radially inner side magnets 131 are all permanent magnets having the same magnetic pole (for example, N pole) as the radially outer side magnets 121, and for example, neodymium magnets are used.

As shown in FIG. 7, the radially inner side magnet 131 is also a magnet that generates an oriented magnetic field parallel to a thickness direction of the radially inner side magnet 131, and is disposed such that the thickness direction faces a radial direction of the cylindrical shape of the bearing stator 130. Namely, magnetic fluxes of the radially inner side magnets 131 are emitted in the radial direction of the bearing stator 130 (also the radial direction of the bearing rotor 120). A magnetic flux leakage prevention cover member 132 is provided between the radially inner side magnets 131 adjacent to each other, and the influence of magnetic force between the radially inner side magnets 131 adjacent to each other is blocked.

Since the radially outer side magnets 121 of the bearing rotor 120 and the radially inner side magnets 131 of the bearing stator 130 are disposed in a disposition relationship as shown in FIG. 4, and the radially outer side magnets 121 and the radially inner side magnets 131 are magnets with the same magnetic pole, a repulsive force is generated between the radially outer side magnets 121 and the radially inner side magnets 131 in a direction in which a gap (air gap) G1 therebetween becomes widened. For this reason, the bearing rotor 120 and the bearing stator 130 are in a non-contact state, and the flywheel 110 is supported by the non-contact type magnetic bearing 100.

In addition, the bearing stator 130 includes a plurality of the magnets 133 disposed on the bottom surface of the cylindrical shape. As shown in FIG. 4, the magnets 133 are located at positions facing the wheel proximal side magnets 123, which are provided on the bearing rotor 120, in the axial direction, and are disposed farther from the flywheel 110 than the wheel proximal side magnets 123. Hereinafter, the magnets 133 are referred to as wheel distal side magnets 133. The plurality of wheel distal side magnets 133 are all permanent magnets having the same magnetic pole (for example, N pole) as the wheel proximal side magnets 123, and for example, neodymium magnets are used.

As shown in FIG. 6, the plurality of wheel distal side magnets 133 are equally disposed in a circular shape with constant intervals therebetween. The positions where the wheel distal side magnets 133 are equally disposed are positions facing the plurality of wheel proximal side magnets 123. As shown in FIG. 8, the wheel proximal side magnet 123 is also a magnet that generates an oriented magnetic field parallel to a thickness direction in the vicinity of the magnet, but deflecting in a radial direction as the oriented magnetic field extends away from the magnet, and is disposed such that the thickness direction faces the direction of the rotating shaft 1. Namely, magnetic fluxes of the wheel distal side magnets 133 are emitted in the axial direction.

As described above, in the present embodiment, the bearing 100 is provided between the outermost peripheral portion and the innermost peripheral portion of the flywheel 110. The bearing 100 includes the bearing rotor 120 firmly fixed to the flywheel 110 so as to rotate integrally with the flywheel 110, and the bearing stator 130 provided inside the bearing rotor 120 in a fixed state. The bearing rotor 120 includes the radially outer side magnets 121 on the inner peripheral surface of the cylindrical shape thereof, and the bearing stator 130 includes the radially inner side magnets 131 at positions facing the radially outer side magnets 121 in the radial direction. The radially outer side magnets 121 and the radially inner side magnets 131 are configured with the same magnetic pole so as to generate a repulsive force. Accordingly, the bearing 100 acts as a non-contact type magnetic bearing.

According to the present embodiment configured in such a manner, the radially outer side magnets 121 are not provided on the outer peripheral side of the flywheel 110, and the bearing rotor 120 including the radially outer side magnets 121 is provided at an inner position closer to the rotating shaft 1 than the outermost peripheral portion of the flywheel 110. Since the bearing rotor 120 including the radially outer side magnets 121 rotates at the position close to the rotating shaft 1, the bearing rotor 120 is less likely to be affected by the weight balance of the plurality of radially outer side magnets 121. For that reason, the rotation of the bearing rotor 120 and the flywheel 110 rotating together therewith is stabilized, and the occurrence of uneven rotation is suppressed from a startup of the flywheel 110, so that the rotation speed can be stabilized. In addition, since not only the bearing rotor 120 but also the bearing stator 130 facing the bearing rotor 120 are not provided at positions outside the outermost peripheral portion of the flywheel 110, the bearing 100 can be compactly configured, and the flywheel device 10 including the flywheel 110 supported by the bearing 100 can be downsized.

In addition, since the wheel proximal side magnets 123 of the bearing rotor 120 and the wheel distal side magnets 133 of the bearing stator 130 are disposed in a disposition relationship as shown in FIG. 4, and the wheel proximal side magnets 123 and the wheel distal side magnets 133 are magnets with the same magnetic pole, a repulsive force is generated between the radially outer side magnets 121 and the radially inner side magnets 131 in a direction in which a gap (air gap) G2 therebetween becomes widened. For this reason, the bearing rotor 120 receives a repulsive force in a direction toward the flywheel 110. Here, a pair of the bearings 100₋₁ and 100₋₂ are provided on both surfaces of the flywheel 110, and the bearing rotor 120 receives a repulsive force in the direction toward the flywheel 110 on both sides of the flywheel 110. For this reason, the center position of the flywheel 110 can be stabilized, and stable rotation of the flywheel 110 can be produced.

Note that in the embodiment, the configuration in which the pair of bearings 100₋₁ and 100₋₂ are provided on both sides of the flywheel 110 has been described; however, only one may be provided. In this case, the wheel proximal side magnets 123 and the wheel distal side magnets 133 may be omitted. However, providing the pair of bearings 100₋₁ and 100₋₂ on both sides of the flywheel 110 is preferable in that the weight balance on both sides can be adjusted and the flywheel 110 can be more stably rotated. In addition, by providing the wheel proximal side magnets 123 and the wheel distal side magnets 133, the center position of the flywheel 110 can be stabilized, and the rotation of the flywheel 110 can be further stabilized.

In addition, in the embodiment, the configuration of the electric power generation system in which the pair of flywheel devices 10₋₁ and 10₋₂ and the pair of generators 20_ ₁ and 20₋₂ are provided at the positions symmetrical with respect to one motor 30 as the center; however, the invention is not limited thereto. For example, the electric power generation system may be configured by one flywheel device 10, one generator 20, and one motor 30.

In addition, in the embodiment, the example in which the magnetic bearing including the bearing rotor 120 and the bearing stator 130 is applied to the flywheel device 10 has been described; however, the magnetic bearing can also be applied to the generator 20 or the motor 30. Namely, a configuration in which the bearing rotor 120 is fixed to the rotating shaft 1 and a coil is provided instead of the radially inner side magnets 131 included in the bearing stator 130 may be adopted.

In addition, all the embodiments are merely specific examples of implementation of the invention, and the technical scope of the invention should not be interpreted as being limited by the embodiments. Namely, the invention can be implemented in various forms without departing from the concept thereof or main characteristics thereof.

### Reference Signs List

- 10:: flywheel device
- 20:: generator
- 30:: motor
- 100:: bearing (magnetic bearing)
- 110:: flywheel
- 120:: bearing rotor
- 121:: radially outer side magnet
- 123:: wheel proximal side magnet
- 130:: bearing stator
- 131:: radially inner side magnet
- 133:: wheel distal side magnet

## Claims

1. A magnetic bearing comprising:
a bearing rotor provided between an outermost peripheral portion and an innermost peripheral portion of a flywheel fixed to a rotating shaft and rotating together with the rotating shaft, and firmly fixed to the flywheel so as to rotate integrally with the flywheel; and
a bearing stator provided inside the bearing rotor in a fixed state instead of rotating together with the flywheel,
wherein the bearing rotor includes a radially outer side magnet disposed on an inner peripheral surface of a cylindrical shape, and
the bearing stator includes a radially inner side magnet having the same magnetic pole as the radially outer side magnet and disposed at a position facing the radially outer side magnet in a radial direction.

2. The magnetic bearing according to claim 1,
wherein the bearing rotor further includes a wheel proximal side magnet disposed on a bottom surface of the cylindrical shape, and
the bearing stator further includes a wheel distal side magnet having the same magnetic pole as the wheel proximal side magnet and disposed at a position facing the wheel proximal side magnet in an axial direction.

3. The magnetic bearing according to claim 1 or 2,
wherein each of the radially outer side magnet and the radially inner side magnet is a magnet that generates an oriented magnetic field parallel to a thickness direction of the magnet.

4. The magnetic bearing according to claim 2,
wherein each of the wheel proximal side magnet and the wheel distal side magnet is a magnet that generates an oriented magnetic field parallel to a thickness direction in the vicinity of the magnet, but deflecting in a radial direction as the oriented magnetic field extends away from the magnet.

5. The magnetic bearing according to any one of claims 1 to 4,
wherein a set of the bearing rotor and the bearing stator are provided on each of both one surface of the flywheel and the other surface opposite to the one surface.

6. A flywheel device comprising:
a flywheel fixed to a rotating shaft and rotating together with the rotating shaft;
a bearing rotor provided between an outermost peripheral portion and an innermost peripheral portion of the flywheel, and firmly fixed to the flywheel so as to rotate integrally with the flywheel; and
a bearing stator provided inside the bearing rotor in a fixed state instead of rotating together with the flywheel,
wherein the bearing rotor includes a radially outer side magnet disposed on an inner peripheral surface of a cylindrical shape, and
the bearing stator includes a radially inner side magnet having the same magnetic pole as the radially outer side magnet and disposed at a position facing the radially outer side magnet in a radial direction.

7. The flywheel device according to claim 6,
wherein the bearing rotor further includes a wheel proximal side magnet disposed on a bottom surface of the cylindrical shape, and
the bearing stator further includes a wheel distal side magnet having the same magnetic pole as the wheel proximal side magnet and disposed at a position facing the wheel proximal side magnet in an axial direction.

8. An electric power generation system comprising:
a generator supported by a rotating shaft; and
a flywheel device supported by the rotating shaft,
wherein the generator includes
an electric power generation rotor fixed to the rotating shaft and rotating together with the rotating shaft; and
an electric power generation stator provided inside the electric power generation rotor in a fixed state instead of rotating integrally with the electric power generation rotor,
the flywheel device includes
a flywheel fixed to the rotating shaft and rotating together with the rotating shaft;
a bearing rotor provided between an outermost peripheral portion and an innermost peripheral portion of the flywheel, and firmly fixed to the flywheel so as to rotate integrally with the flywheel; and
a bearing stator provided inside the bearing rotor in a fixed state instead of rotating together with the flywheel,
the bearing rotor includes a radially outer side magnet disposed on an inner peripheral surface of a cylindrical shape, and
the bearing stator includes a radially inner side magnet having the same magnetic pole as the radially outer side magnet and disposed at a position facing the radially outer side magnet in a radial direction.

9. The electric power generation system according to claim 8,
wherein the bearing rotor further includes a wheel proximal side magnet disposed on a bottom surface of the cylindrical shape, and
the bearing stator further includes a wheel distal side magnet having the same magnetic pole as the wheel proximal side magnet and disposed at a position facing the wheel proximal side magnet in an axial direction.
